# EUROPEAN PATENT APPLICATION

(11) **EP 2 301 658 A1**
(43) Date of publication of application: **30.03.2011**
(21) Application number: 09765955.1
(22) Date of filing: 19.06.2009
(51) Int. Cl.: B01J 8/24

(54) **TWO-ZONE FLUIDISED-BED REACTOR**

(30) Priority: 19.06.2008 ES 200801839
(71) Applicant: Universidad De Zaragoza, 50009 Zaragoza (ES)
(72) Inventor: MENÉNDEZ SASTRE, Miguel, E-50009 Zaragoza (ES); HERGUIDO HUERTA, Javier, E-50009 Zaragoza (ES); TÉLLEZ ARISO, Carlos, E-50009 Zaragoza (ES); SOLER HERRERO, Jaime, E-50009 Zaragoza (ES); GIMENO TOLOSA, María Pilar, E-50009 Zaragoza (ES)
(74) Representative: Pons Ariño, Maria Purificación
(86) International application number: PCT/ES2009/070241
(87) International publication number: WO 2009/153382

(57) **Abstract**

The invention relates to a fluidised-bed reactor (10, 20, 30, 40) comprising two zones (11,12, 21, 22; 31, 32; 41, 42), in which the upper zone (11, 21, 31, 41) has a different cross-section to the lower zone (12, 22, 32, 42). A zone with a reducing atmosphere is obtained in one of the two zones (11,12, 21, 22; 31, 32; 41, 42) and a zone with an oxidising atmosphere is obtained in the other zone. In a preferred embodiment of the invention, the cross-section of the upper zone (11, 21, 31, 41) is greater than that of the lower zone (12, 22, 32, 42), thereby producing a reducing atmosphere in the upper zone (11, 21, 31, 41) and an oxidising atmosphere in the lower zone (12, 22, 32, 42). In addition, rows of flow-distributing pipes are provided in the upper zone (11, 21, 31, 41) in order to prevent the appearance of dead zones.

## Description

### OBJECT OF THE INVENTION

The object of the present application is included within the field of reactors used for carrying out chemical reactions in their interior, in particular in the two zone fluidized bed reactors.

### BACKGROUND OF THE INVENTION

Within the reactors used for carrying out chemical reactions in their interior, are the so-called fixed bed and fluid bed reactors, which are characterized by the presence of what is called a particle bed. A particle bed consists of a layer of solid particles of substance(s) that intervene in the reaction considered, either as a reagent or as a catalyst, which is crossed by the reagents in the fluid phase.

When the flow speed of the reagents in the fluid phase through the bed is low, there is no substantial displacement of the solid particles which make up the bed. In this case we are dealing with fixed bed reactors.

An increase in the flow speed of the reagents in the fluid phase through the bed and upstream in turn causes an agitation of the bed particles. From a critical value of velocity, called minimum fluidization velocity, it produces what is called continuous fluidization or a fluidized bed, in which all the particles are agitated by the passage of the fluid phase through the bed, so that the bed no longer consists of static particles and the material that constitutes it acquires fluid properties and behaviour.

The phenomenon on which the fluidized bed reactors are based is common knowledge within the technical field of chemical reactors and has been disclosed in many texts, among which are cited, by way of example:
- Kunii, D. and Levenspiel, O. "Fluidization Engineering" Elsevier, 2005
- Santamaría, J., Herguido, J., Menéndez, M. and Monzón, A. "Ingeniería de Reactores", Ed. Síntesis, 1999.

A particular type of fluidized bed reactor is the so-called "two zone", in which the fluid currents containing the substances which take part in the reaction are introduced into the reactor at different positions of height, so as to generate conditions for reactions of a different nature to occur in the upper and lower part of the reactor mentioned.

A normal use of the two zone fluidized bed reactors are some reactions with catalyst regeneration, through which the reaction that gives rise to the desired products is produced in one of the zones and the catalyst regeneration reaction, of opposite characteristics, is produced simultaneously in a different zone of the reactor.

In the publication "Catalysis Today" no. 100 (2005), pgs. 181-189 of J. Herguido, M. Menéndez and J. Santamaría, a review is shown of some works from the inventors wherein fluidized bed reactors are used such as two zone reactors, using a fluidized bed wherein an oxidising agent is fed into the lower zone of the bed and a hydrocarbon at an intermediate point. In this way, two zones are created: in the lower zone an oxidising atmosphere is created and in the upper zone a reducing atmosphere is created. Therefore, it is possible to carry out a hydrocarbon oxidation reaction in the upper zone and regenerate the catalyst with the oxidising agent in the lower zone.

A reactor process with two reaction zones in a single tank has been disclosed in patent applications. For example, in patent application US02007/0213573, a two zone reactor is disclosed for catalytic gas-solid reactions of different sections where the purpose of these two zones is to change the residence time between both zones, working in the second section in a riser type bed. The patent US 6,197,265 also proposes a fluidized bed with two zones of the same size where different gases may be fed in each zone, the usefulness of these feeds being the reaction of the solid which is fed by optimizing the reaction atmosphere. Also in patent application EP1242344 (WO0144146), a two zone reactor is shown for a reaction of dehydrogenation of an alkyl-aromatic, the reaction occurs in one zone and the catalyst regeneration takes place in another zone, the two zones being of equal sections. In the patent application US4152393, a single chamber is also presented where the reaction and regeneration take place, the catalyst goes from one zone to the other but the gases of the reaction zone do not mix with those of the oxidation. None of the patent cases disclosed propose that the reaction takes place in one of the two zones and in the other the catalyst regeneration takes place with zones of distinct sections in the same reactor.

The majority of the cases of operation - regeneration or oxidation - reduction processes do not present reaction kinetics with the same velocity in both directions. In the publication of the "Journal of Catalysis" no. 185 (1997) pgs. 324-332 by López Nieto and others, the experimental verification can be consulted whereby the total oxidation of a fully reduced VMgO catalyst is 3 times faster than the total reduction of the same fully oxidized catalyst.

Furthermore, in many cases the gas flow required in the two zones is very different, for example, when an oxidising gas is introduced to regenerate the catalyst in the lower zone, the flow needed is usually much lower than the hydrocarbon flow to be treated.

This experimental verification proposes the technical need to balance the contact times of the gases inside the reactor and also adapt the velocity of the gas in each zone to keep it within the value range suitable for fluidization.

Furthermore, it is known that in reactions in which a significant number of intermediate products exist, working in certain conditions of circulation rate through the bed to obtain a greater quantity of the desired product can result in a negative consequence, i.e. the reaction with the catalyst is not completely sufficient, therefore the additional technical problem arises of finding a two zone fluidized bed reactor design that avoids or minimises the aforementioned problem.

### DESCRIPTION OF THE INVENTION

The object of the present invention solves the abovementioned problems through the use of a two zone fluidized bed reactor, wherein a feed is produced in the lower part of the bed and another feed is produced at an intermediate part of said bed, where one of the feeds comprises reagents and another of the feeds comprises an oxidising agent of the reagents or an oxidising agent that gasifies the coke deposited in the catalyst, as a result of which two differentiated zones are generated in the interior of the reactor of the invention, a reducing atmosphere zone and an oxidising atmosphere zone. The reactor of the invention stands out especially because the reducing atmosphere zone and oxidising atmosphere zone present sections of varying values.

According to a preferred embodiment of the invention, one of the feeds comprises reagents and the other feed comprises an oxidising agent of the reagents or a catalyst regeneration reagent, for use in oxidation processes or in processes with simultaneous catalyst deactivation and regeneration.

The existence of two zones of different dimensions in the reactor, where in one of them reduction reactions are produced and in the other oxidation reactions are produced, leads to greater control of the gas flow and velocity in each zone of the reactor, therefore providing an additional degree of freedom when determining a circulation rate compatible with full catalyst regeneration.

The use of the reactor of the invention turns out equally advantageous for reactions whose velocity increases with a different dilution of the reagents and wherein it is therefore convenient to have different flows in each of the two zones of the reactor.

Another of the advantageous characteristics of the reactor of the invention consists of it solving a known typical problem of the processes with hydrogen recovery: the combination of a hydrogen selective membrane with a two zone reactor allows combining two complementary advantages in one single device. The membrane reactor can increase the equilibrium conversion of the reaction, as is well known to the skilled persons (cf. Inorganic membranes: synthesis, characterization and applications, R. Mallada and M. Menéndez (eds.) Elsevier, 2008), and in the case of reactions wherein hydrogen is produced, it can be removed from the reaction medium using membranes made of palladium or their alloys, or using hydrogen-selective, dense ceramic membranes, as has been disclosed in fluidized bed reactors, or other materials that can remove hydrogen preferentially. However, a common problem of the membrane reactors wherein hydrogen is removed from the reaction medium is that it increases the catalyst deactivation rate, forming carbonaceous materials, known as coke. Combining the membrane reactor with the two zone fluidized bed reactor disclosed herein avoids the problem of catalyst deactivation, since it can be continually regenerated, maintaining the advantage relating to the membrane reactor consisting of a greater conversion being reached than in a conventional fixed bed reactor, since on removing the hydrogen, which is a product of the reaction, it is displaced towards the increase of the formation of products.

A further advantageous use of the two zone reactor of the invention lies in its ability to carry out, simultaneously to the reactions carried out inside it, the filtration of hot gases and the combustion of particles or low volatile compounds present in the reactor, such as soot or tar. To achieve this end, the hot gas is introduced into the upper zone of the bed, so the solid that is present in the same acts as a filter for particles or low volatile compounds, and in the lower zone a current of oxidizing agent is introduced (which contains for example oxygen or water vapour), in such a way that it causes the combustion or gasification of said particles or low volatile compounds.

In a preferred embodiment of the invention, the introduction of screens or rows of tubes is considered which are designed to distribute the flow in the upper part, with the purpose of avoiding the appearance of dead zones.

In another preferred embodiment of the invention, the reactor comprises two uniform section elements, connected using an intermediate variable section element. Preferential but not limited to, the uniform section elements are cylinders and the variable section element has a conical shape. However, it also provides for the possibility that the section of the reactor varies continuously from the lower feed point to the upper zone, thus eliminating the need for the intermediate element.

In the design of the reactor with two zones of different sections, it shall be taken into account the angle of the transition zone between the zones, so that a wider angle (closest to 90°) can generate the appearance of dead catalyst zones that would decrease the efficiency of the reactor, while a very tight angle (closer to 0°) would make the transition zone very extended, diminishing the advantages of this design.

As indicated above, the reactor of the invention presents a great use for carrying out catalysed oxidation processes wherein simultaneous catalyst regeneration occurs as well as processes with deactivation by coke wherein the catalyst can be regenerated by eliminating the coke. Set out below, by way of illustration, but not limited to, are some of the reactions whose carrying out in the reactor of the invention presents considerable advantages with respect to its carrying out in other reactors that do not possess the characteristics of the reactor of the invention:
- oxidation of butane, butene or pentane to maleic anhydride,
- oxidation of propane to acrolein and/or acrylic acid,
- oxidative coupling of methane,
- oxidation of benzene to phenol,
- oxidation of alkyl benzenes,
- oxidation of ethane or ethylene to acetic acid,
- oxidative dehydrogenation of hydrocarbons (ethane, propane, butane, isobutane, etc.),
- oxidation of methanol to formaldehyde,
- partial oxidation or reforming of hydrocarbons or carbonaceous compounds (for example, methane, ethane, methanol, ethanol to synthesis gas),
- dehydrogenation of alkanes,
- dehydroaromatization of alkanes.

### DESCRIPTION OF THE DRAWINGS

To complement the description that is being made and in order to help better understand the characteristics of the invention, according to a preferred example of practical embodiment of said invention, a set of drawings is attached as an integral part of said description with an illustrative and non-limiting nature, wherein the following has been represented:

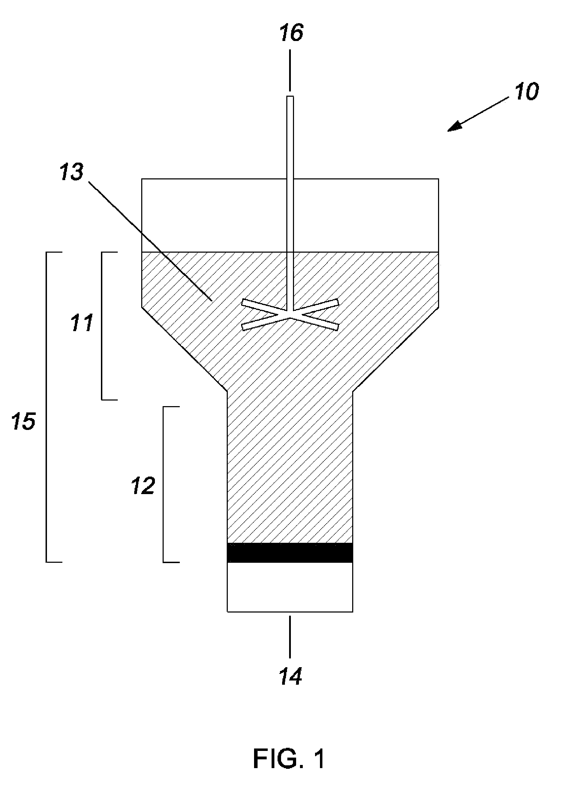

Figure 1. - Shows an elevated schematic view of a two zone fluidized bed reactor wherein the upper zone presents a larger section than the lower zone and wherein the feed that is produced in the lower zone of the bed produces an oxidising character atmosphere in the lower zone of the reactor, whilst the feed at an intermediate zone of the bed produces a reducing character atmosphere in the upper zone of the reactor.

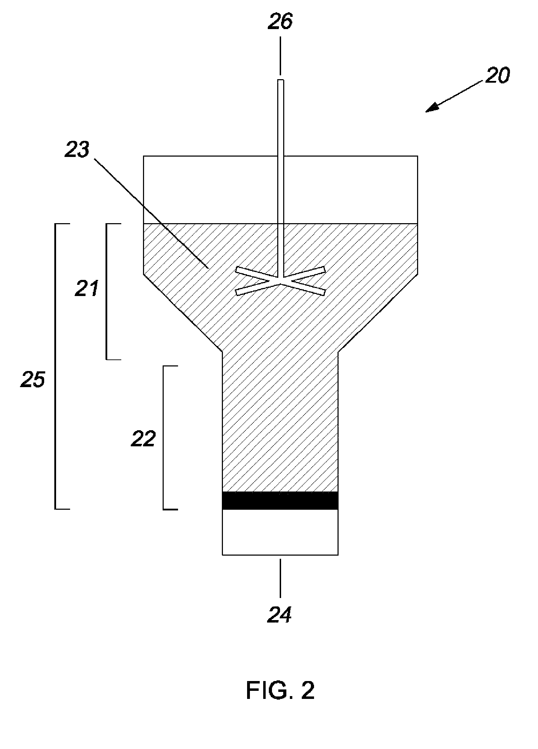

Figure 2.- Shows an elevated schematic view of a two zone fluidized bed reactor wherein the upper zone presents a larger section than the lower zone and wherein the feed that is produced in the lower zone of the bed produces a reducing character atmosphere in the lower zone of the reactor, whilst the feed that is produced at an intermediate zone of the bed produces an oxidising character atmosphere in the upper zone of the reactor.

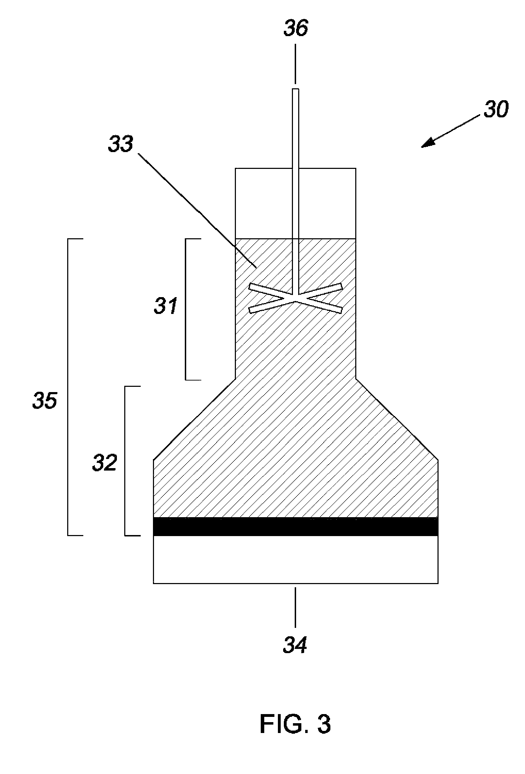

Figure 3. - Shows an elevated schematic view of a two zone fluidized bed reactor wherein the lower zone presents a larger section than the upper zone and wherein the feed that is produced in the lower zone of the bed produces an oxidising character atmosphere in the lower zone of the reactor, whilst the feed that is produced at an intermediate zone of the bed produces a reducing character atmosphere in the upper zone of the reactor.

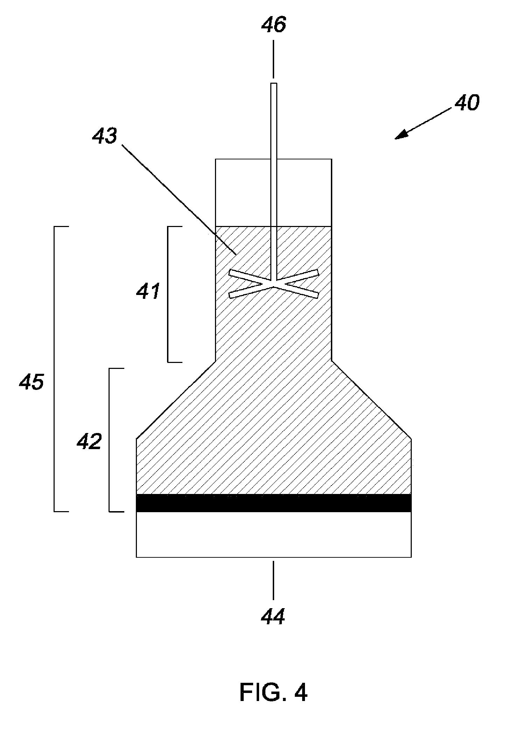

Figure 4. - Shows an elevated schematic view of a two zone fluidized bed reactor wherein the lower zone presents a larger section than the upper zone and wherein the feed that is produced in the lower zone of the bed produces a reducing character atmosphere in the lower zone of the reactor, whilst the feed that is produced at an intermediate zone of the bed produces an oxidising character atmosphere in the upper zone of the reactor.

### PREFERRED EMBODIMENT OF THE INVENTION

Four preferred embodiments of the invention are presented:

### FIRST PREFERRED EMBODIMENT

As shown in Figure 1, a two zone (11, 12) fluidized bed reactor (10) is presented wherein the upper zone (11) presents a larger section than the lower zone (12). A first feed (14) is produced in the lower zone (12) of the bed (15), which produces an oxidising character atmosphere in said lower zone (12) of the bed (15). Furthermore, a second feed (16) is produced at an intermediate part (13) of the bed (15), which produces a reducing character atmosphere in the upper zone (11) of the bed (15).

The reactor (10) may include some rows of tubes (not represented) designed to distribute the flow in the upper zone (11), with the purpose of avoiding the appearance of dead zones.

### SECOND PREFERRED EMBODIMENT

As shown in Figure 2, a two zone (21, 22) fluidized bed reactor (20) is presented wherein the upper zone (21) presents a larger section than the lower zone (22). A first feed (24) is produced in the lower zone (22) of the bed (25), which produces a reducing character atmosphere in said lower zone (22) of the bed (25). Furthermore, a second feed (26) is produced at an intermediate part (23) of the bed (25), which produces an oxidising character atmosphere in the upper zone (21) of the bed (25).

The reactor (20) may include some rows of tubes (not represented) designed to distribute the flow in the upper zone (21), with the purpose of avoiding the appearance of dead zones.

### THIRD PREFERRED EMBODIMENT

As shown in Figure 3, a two zone (31, 32) fluidized bed reactor (30) is presented wherein the upper zone (31) presents a smaller section than the lower zone (32). A first feed (34) is produced in the lower zone (32) of the bed (35), which produces an oxidising character atmosphere in said lower zone (32) of the bed (35). Furthermore, a second feed (36) is produced at an intermediate part (33) of the bed (35), which produces a reducing character atmosphere in the upper zone (31) of the bed (35).

The reactor (30) may include some rows of tubes (not represented) designed to distribute the flow in the upper zone (31), with the purpose of avoiding the appearance of dead zones.

### FOURTH PREFERRED EMBODIMENT

As shown in Figure 4, a two zone (41, 42) fluidized bed reactor (40) is presented wherein the upper zone (41) presents a smaller section than the lower zone (42). A first feed (44) is produced in the lower zone (42) of the bed (45), which produces a reducing character atmosphere in said lower zone (42) of the bed (45). Furthermore, a second feed (46) is produced at an intermediate part (43) of the bed (45), which produces an oxidising character atmosphere in the upper zone (41) of the bed (45).

The reactor (40) may include some rows of tubes (not represented) designed to distribute the flow in the upper zone (41), with the purpose of avoiding the appearance of dead zones.

## Claims

1. Two zone (11, 12; 21, 22; 31, 32; 41, 42) fluidized bed reactor (10, 20, 30, 40), wherein a first feed (14, 24, 34, 44) is produced in the lower part (12, 22, 32, 42) of the bed (15, 25, 35, 45) and a second feed (16, 26, 36, 46) is produced in an intermediate part (13, 23, 33, 43) of the aforementioned bed (15, 25, 35, 45), as a result of which two differentiated upper and lower zones (11, 12; 21, 22; 31, 32; 41, 42) are generated in the interior of the reactor (10, 20, 30, 40) of the invention: one of the said zones is a zone of reducing atmosphere and the other is a zone of oxidising atmosphere, **characterized in that** the dimensions of the section corresponding to the oxidising atmosphere zone are different from the dimensions corresponding to the section of the reducing atmosphere zone.

2. Reactor (10, 20, 30, 40) according to claim 1, **characterized in that** the upper zone (11, 21, 31, 41) presents a larger section and is a zone of reducing atmosphere, whilst the lower zone (12, 22, 32, 42) presents a smaller section and is a zone of oxidising atmosphere.

3. Reactor (10, 20, 30, 40) according to claim 1, **characterized in that** it comprises two upper and lower elements of uniform section, said uniform sections being different from each other, and comprises in addition a third intermediate element of variable section for connecting said upper and lower elements.

4. Reactor (10, 20, 30, 40) according to any of the preceding claims, **characterized in that** the upper element presents a variable section.

5. Reactor (10, 20, 30, 40) according to any of the preceding claims, **characterized in that** the upper zone (11, 21, 31, 41) presents a smaller section and is a zone of reducing atmosphere, whilst the lower zone (12, 22, 32, 42) presents a larger section and is a zone of oxidising atmosphere.

6. Reactor (10, 20, 30, 40) according to any of the preceding claims, **characterized in that** it also incorporates in the upper zone (11, 21, 31, 41) some rows of tubes designed to distribute the flow to avoid the appearance of dead zones.

7. Reactor (10, 20, 30, 40) according to any of the preceding claims, **characterized in that** the bed (15, 25, 35, 45) comprises some hydrogen selective membranes, to remove the hydrogen from the reaction medium in hydrogen formation reactions, displacing the reaction towards the side of the products.

8. Reactor (10, 20, 30, 40) according to any of the preceding claims, **characterized in that** one of the feeds (14, 16; 24, 26; 34, 36; 44, 46) comprises reagents and another of the feeds (14, 16; 24, 26; 34, 36; 44, 46) comprises an oxidising agent of the reagents or a catalyst regeneration reagent, for use in oxidation processes or processes with simultaneous catalyst deactivation and regeneration.

9. Reactor (10, 20, 30, 40) according to claim 1, **characterized in that** the upper zone (11, 21, 31, 41) is an oxidising zone and the lower zone (12, 22, 32, 42) is a reducing zone.

10. Use of the reactor (10, 20, 30, 40) disclosed in any of the preceding claims for the filtration of hot gases of the reaction and the filtration of particles or low volatile compounds present in said gases, through the introduction of the hot gas in the upper zone of the bed, so the solid of the bed acts as a filter absorbing the low volatile particles and causing the combustion of the same in the lower zone (12, 22, 32, 42), where the feed of a current of oxidising agent is provided.
